# EUROPÄISCHE PATENTSCHRIFT

(11) **EP 2 217 678 B1**
(45) Veröffentlichungstag und Bekanntmachung des Hinweises auf die Patenterteilung: **02.01.2013**
(21) Anmeldenummer: 08861177.7
(22) Anmeldetag: 17.11.2008
(51) Int. Cl.: C09K 11/80, H01J 61/44

(54) **LEUCHTSTOFF UND BELEUCHTUNGSSYSTEM MIT DERARTIGEM LEUCHTSTOFF**
LUMINOPHORE AND ILLUMINATION SYSTEM HAVING SUCH A LUMINOPHORE
SUBSTANCE LUMINESCENTE ET SYSTÈME D'ÉCLAIRAGE DOTÉ DE CETTE SUBSTANCE LUMINESCENTE

(30) Priorität: 14.12.2007 DE 102007060199
(43) Veröffentlichungstag der Anmeldung: 18.08.2010
(73) Patentinhaber: OSRAM AG, 81543 München (DE)
(72) Erfinder: HIRRLE, Renate, 86163 Augsburg (DE); HUBER, Günter, 86529 Schrobenhausen (DE); JERMANN, Frank, 86343 Königsbrunn (DE); ZACHAU, Martin, 82269 Geltendorf (DE)
(86) Internationale Anmeldenummer: PCT/EP2008/065668
(87) Internationale Veröffentlichungsnummer: WO 2009/077278

(56) Entgegenhaltungen:
- EP-A1- 1 484 803
- WO-A-2006/076737
- US-A1- 2005 253 114
- US-A1- 2005 275 333
- US-A1- 2006 027 781

## Beschreibung

### Technisches Gebiet

Die Erfindung geht aus von einem Leuchtstoff, bevorzugt zum Einsatz bei Lichtquellen, gemäß dem Oberbegriff des Anspruchs 1. Die Erfindung betrifft einen hocheffizienten Leuchtstoff aus der Klasse BAM, der bevorzugt im Blauen und/oder im Blaugrünen emittiert. Weiter betrifft die Erfindung eine damit hergestellte Lichtquelle bzw. ein Beleuchtungssystem mit einem derartigen Leuchtstoff.

### Stand der Technik

Die US-B 7 077 978 beschreibt einen Leuchtstoff auf der Basis von BAM, der mit Eu und Mn dotiert ist. Dieser Leuchtstoff ist für die Anwendung bei UV-LEDs gedacht. Ein ähnlicher Leuchtstoff ist aus WO 2006/072919 bekannt. Außerdern ist aus WO 2006/027786 ein rein mit Eu dotierter Leuchtstoff auf BAM-Basis bekannt. Die übliche Dotierung bei einem derartigen Leuchtstoff ist ein maximaler Gehalt von Eu2+ von höchstens 50 mol.-% des Ba.
**Die** US 2006/027781 **beschreibt ein Sr-Aluminat,**

### Darstellung der Erfindung

Die Aufgabe der vorliegenden Erfindung ist es, einen optimalen Leuchtstoff für Anwendungen durch Anregung im kurzwelligen Bereich anzugeben. Dabei soll die Peakwellenlänge der Anregung bei höchstens 420 nm liegen.

Diese Aufgabe wird gelöst durch die kennzeichnenden Merkmale des Anspruchs 1.

Diese Aufgabe wird gelöst durch die kennzeichnenden Merkmale des Anspruchs 1.

Besonders vorteilhafte Ausgestaltungen finden sich in den abhängigen Ansprüchen.

Die bisher bekannten BAM-Leuchtstoffe haben typisch die Stöchiometrie BaMgAl10017:Eu. Dabei ist Eu ein zweiwertiger Aktivator, der üblicherweise in einer maximalen Konzentration von allenfalls 50 % des Ba, gerechnet in MolProzent, zugegeben wird. Gelegentlich wird auch Mn als Ko-Aktivator verwendet, um die Emission langwelliger zumachen. Die Emission liegt somit im Blauen oder Blaugrünen Spektralbereich.

Insbesondere zur Realisierung effizienter weißer LEDs auf Basis von UV-LEDs sind effiziente, temperaturstabile blaue Leuchtstoffe notwendig. Dies setzt eine gute Absorption der Leuchtstoffe vor allem im Bereich 340-420 nm, insbesondere 380-410 nm bei near-UV-LEDs, sowie eine hohe Quanteneffizienz voraus. Entscheidend bei LEDs ist das Produkt aus Absorption und Quanteneffizienz. Die Leuchtstoffe dürfen bei hohen Anregungsintensitäten, wie sie insbesondere in Hochleistungs-LEDs vorkommen, nicht sättigen. Außerdem sollten sie aufgrund der hohen auftretenden Temperaturen bis zu 200 °C in Hochleistungs-LEDs eine möglichst geringe thermische Löschung der Lumineszenz aufweisen.

Zur Zeit werden dafür überwiegend SCAP:Eu (Sr,Ca-Chlorapatite) sowie BAM:Eu (BaMg-Aluminat) als blau emittierende Leuchtstoffe eingesetzt. SCAP weist bei den üblicherweise verwendeten Eu-Konzentrationen zwischen 5 und 15% Eu bereits eine sehr hohe Absorption im Spektralbereich zwischen 380 - 410 nm auf. Allerdings sind Quanteneffizienz und thermisches Lösch-Verhalten bei diesen Eu-Konzentrationen nicht mehr optimal und schlechter als bei BAM:Eu. Außerdem ist die kurzwellige, schmalbandige Emission von SCAP nicht immer von Vorteil, wenn effiziente weiße LED mit hoher Farbwiedergabe hergestellt werden sollen. BAM:Eu wird mit Eu-Konzentration < 50% (typisch eher < 30%) eingesetzt, hat aber gegenüber SCAP den Nachteil einer schlechteren Absorption im Bereich 380-410 nm.

Durch überwiegende Substitution des Ba2+ - Ions durch Eu2+ im BAM-Wirtsgitter BaMgAl10017 ergibt sich überraschenderweise ein sehr effizienter Leuchtstoff. Dabei ist wichtig, dass der Ba-Gehalt so eingestellt wird, dass eine zu starke Energiemigration zwischen den Eu2+ - Ionen verhindert wird. Sehr gut geeignete Leuchtstoffe erhält man für Ba-Konzentrationen zwischen 35 und 45%, gemäß der Formel BaₓEu₁₋ₓMgAl₁₀O₁₇ mit x = 0,35 bis 0,45.

Ein typisches Beipiel ist Eu0, 6Ba0, 4MgAl10017. Der 40%-Anteil an Ba2+ unterbindet hier wirksam eine zu starke Energiemigration und damit thermische Lumineszenzmischung. Der neue Leuchtstoff ist beispielsweise für "Color on demand"-LEDs oder für weiße LEDs geeignet. Er lässt sich für unterschiedliche Farbtemperaturen und Anwendungen mit hoher Effizienz und guter Farbwiedergabe maßschneidern.

Der erfindungsgemäße Eu-Aluminat-Leuchtstoff weist eine extrem geringe Temperaturlöschung auf. Bei 175 °C liegt die Effizienz noch oberhalb von 80% der Effizienz bei 25°C. Die Pulvertabletten-Absorption der Verbindung Eu0, 6Ba0, 4MgAl10017 liegt bei Anregung mit 400 nm bereits bei mehr als 80% und ist bei 380 nm sogar größer als 90% bei Partikelgrößen des Leuchtstoffs kleiner als 12 µm. Eine gut geeignete Partikelgröße ist 0,5 bis 10 µm. Der Begriff Partikelgröße ist hier verstanden als d50-Wert, genauer als median der mittels Laserstreuung, beispielsweise CILAS, gemessenen, volumenbezogenen Partikelgrößenverteilung.

Die Quanteneffizienz (QE) des neuartigen Leuchtstoffs liegt typischerweise bei 84% +/- 5% bei Anregung mit 400 nm. Bei noch kürzerwelliger Anregung lassen sich QE-Werte von mehr als 90% erreichen.

Eine weitere Ausführungsform der Erfindung ist ein BAM-Leuchtstoff, der neben Eu zusätzlich mit Mn dotiert ist. Mn nimmt den Gitterplatz von Mg ein. Ein erfindungsgemäßer Leuchtstoff hat in diesem Fall die Stöchiometrie BaₓEu₁₋ₓMg_{z}Mn_{1-z}Al₁₀O₁₇. Dabei ist x im Bereich x = 0,35 bis 0,48 anzusetzen. Für die Auswahl von z ist z = 0,65 bis 0,995 anzusetzen. Mn ist allerdings deutlich empfindlicher für Sättigungseffekte. Daher ist der Einsatz von Mn auf Anwendungen bei relativ geringen Intensitäten beschränkt.

Die hohe Europiumdotierung lässt sich auch auf BAM-Leuchtstoffe mit anderer Stöchiometrie und Zusammensetzung anwenden. In einer weiteren Ausführungsform wird der BAM-Leuchtstoff beschrieben durch die Stöchiometrie BaₓEu₁₋ₓMg_{1-n+d}MnₙAl_{10+2f}O_{17+d+3f}.

Dabei gilt 0,2 ≤ x ≤ 0,48; bevorzugt ist 0,35 ≤ x ≤ 0,45;
0 ≤ n ≤ 0,3, bevorzugt 0 ≤ n ≤ 0,2;
0 ≤ d ≤ 0,1;
-0,1 ≤ f ≤ 1,0.

Es handelt sich dabei um mehr oder weniger stöchiometrisch einfach beschreibbare Verbindungen, wie diese Varietäten für BAM bekannt sind. Grundsätzlich sind solche Wirtsgitter beispielsweise aus WO 2006/072919 vorbekannt. In seiner allgemeinsten Form umfasst daher das Wirtsgitter BAM auch Stöchiometrien beispielsweise des Typs BaAl12O19 oder BAL. Noch allgemeiner formuliert lässt sich die Vielzahl an Stöchiometrien für BAM so darstellen, dass es sich um eine Mischung zweier Aluminate handelt, wobei ein erstes Aluminat Ba-arm ist, entsprechend der Stöchiometrie 0,82BaO*6Al₂O₃, und ein zweites Aluminat Mg-haltig ist und das eigentliche BAM BaMgAl10017 repräsentiert. Weil das Ba-arme Aluminat und das eigentliche BAM, also BaMgAl10017, dieselbe Kristallstruktur wie beta-Al2O3 haben, bilden beide Verbindungen feste Lösungen mit beta-Al2O3-Struktur. Eine allgemeine erfindungsgemäße Aluminat-Stöchiometrie lässt sich daher beschreiben als { (1-a) * (0, 82 [BaₓEu₁₋ₓO] * 6 [Al₂O₃])}*a (BaₓEu₁₋ₓMgAl₁₀O₁₇).

Dabei ist a grundsätzlich gegeben durch 0 ≤ a ≤ 1. insbesondere ist a ≥ 0,2. Bevorzugt ist a mindestens 0,65, besonders bevorzugt ist a mindestens 0,8. Der Wert für x liegt bei mindestens 0,52 bis hin zu 0,8. Bevorzugt ist x = 0,55, bis 0,65.

Bei weniger belasteten Anwendungen kann auch Mn kodotiert werden als Ersatz für Mg gemäß der Aluminat-Stöchiometrie {(1-a)*(0, 82 [BaₓEu₁₋ₓO]*6[Al₂O₃])}*a (BaₓEu₁₋ₓMg_{1-z}Mn_{z}Al₁₀O₁₇).

Dabei sollte z insbesondere kleiner 0,3 und bevorzugt höchstens 0,15 betragen, besonders bevorzugt höchstens 0,04.

Des weiteren lässt sich Ba in dieser Darstellung teilweise oder vollständig durch Sr, oder auch teilweise durch Ca, substituieren.

In einer weiteren Ausführungsform lässt sich die hohe Europiumkonzentration auf Leuchtstoffe anwenden, bei denen Ba teilweise oder vollständig durch Sr und/oder Ca ersetzt ist, und die vom eigentlichen BAM abgeleitet sind. Dieser Leuchtstoff wird beschrieben durch die Stöchiometrie MₓEu₁₋ₓMg_{1-y+d}Mn_{y}Al_{10+2f}O_{17+d+3f} mit M = (Ba,Sr,Ca), wobei M bevorzugt durch Ba_{z}(Ca, Sr)_{1-z} repräsentiert ist mit z ≥ 0,7.

Dabei gilt 0,2 ≤ x ≤ 0,48; bevorzugt ist 0,35 ≤ x ≤ 0,45;
0 ≤ y ≤ 0,3, bevorzugt 0 ≤ y ≤ 0,2;
0 ≤ d ≤ 0,1;
-0,1 ≤ f ≤ 1, 0.

Ein derartiger LS eignet sich insbesondere für die Anwendung bei PDP (Plasma Display Panel). Für PDP werden häufig Mischungen von Leuchtstoffen verwendet, gemäß beispielsweise dem RGB-Prinzip. Insbesondere eignet sich dabei eine Mischung des neuartigen BAM mit Zn2SiO4:Mn oder BaAl12019:Mn für die grün emittierende Leuchtstoff-Komponente und mit (Y,Gd)BO3:Eu oder YOE, also Y2O3:Eu für die rot emittierende Leuchtstoff-Komponente.

Die Herstellung derartiger Leuchtstoffe gelingt im Prinzip ähnlich wie bei bekannten BAM-Leuchtstoffen. Als Schmelzmittel haben sich dabei Halogenverbindungen, bevorzugt Fluoride und Chloride, bewährt. Aber auch Lithium- und Bor-haltige Verbindungen lassen sich einsetzen.

Für die Herstellung werden die Edukte Al2O3, BaCO3, SrCO3, MgO, Eu2O3, BaF2 im Taumelmischer o.ä. für mehrere Stunden gemischt. Die Reaktionstemperatur sollte bei 1500 bis 1650 °C liegen. Danach wird Formiergas mit einem Anteil H2 von 2 bis 20 % eingeleitet. Anshcießend wird der Leuchtstoff in einer Mühle für etwa 5 bis 30 min gemahlen. Anschließend kann der Leuchtstoff ggf. noch Wasser oder verdünnten Säuren gewaschen werden.

Darüber hinaus lassen sich in dieses allgemeine Wirtsgitter auch in geringem Umfang die Elemente, F, Cl, Li, Na, B, La, Ce, Nd, Sm, Pr, Gd, Yb, Lu einsetzen. Dabei sollte die über XRD nachweisbare Gitterstruktur im wesentlichen unverändert bleiben. Im einzelnen lassen sich insbesondere folgende Modifikationen durchführen:
- Ersatz von Al in geringem Umfang durch B;
- Substitution von 2M durch M1+M3, wobei M1 eines oder mehrere der einwertigen Metalle Li und/oder Na ist und M3 eines oder mehrere der dreiwertigen Seltenerdmetalle aus der Gruppe La, Ce, Nd, Sm, PR, Gd. Yb, Lu ist;
- Einbau von M1+H in das Wirtsgitter, wobei M1 ein einwertiges Metall wie oben definiert ist und H eines oder mehrere Halogene aus der Gruppe F, Cl ist; bevorzugt liegt der Anteil bei maximal 1 %.
- Einbau auf Zwischengitterplätze von dreiwertigen Seltenerdmetallen M3 + ZZ, wobei M3 wie oben definiert ist und ZZ eines oder mehrere Elemente aus der Gruppe F, Cl, O ist; auch Mischungen daraus; bevorzugt liegt der Anteil für F und Cl bei maximal 1 %, für O bei maximal 5 %.
- Einbau von verschiedenen metallischen Ionen wie Si, die in großen Konzentrtionen die Lumineszenez quenchen würden, in einem Umfang, der die Luminesznez noch nicht merklich verringert. Damit sind Anteile in Spuren gemeint, die deutlich unter 1 Gew.% liegen.

Der erfindungsgemäße Leuchtstoff lässt sich bevorzugt für Lichtquellen, die im UV emittieren anwenden, um eine Konversion in den sichtbaren Spektralbereich zu erzielen. Die Anregung gelingt am besten bei einer Peakwellenlänge von 300 bis 420 nm, bevorzugt 340 bis 410 nm, besonders bevorzugt bei 380 bis 410 nm. Als Lichtquellen eigenen sich Niederdrucklampen, Hochdruckentladungslampen, aber auch insbesondere LEDs nach dem Prinzip einer Konversions-LED. Dabei lassen sich zum einen farbig emittierende LEDs realisieren, wobei insbesondere nur ein einziger Leuchtstoff des oben beschriebenen Aluminat-Typs, insbesondere BAM, verwendet wird. Es lassen sich aber insbesondere auch weiß emittierende LEDs realisieren, wobei dafür im allgemeinen auch zusätzlich mindestens ein weiterer Leuchtstoff, der entweder gelb emittiert (für eine "BY"-Lösung), oder grün und rot emittierende Leuchtstoffe (für eine "RGB"-Lösung), wie an sich bekannt verwendet werden.

Für eine BY-Lösung eignet sich insbesondere ein Granat wie YAG:Ce oder ein Sion. Für eine RGB-Lösung eignen sich insbesondere grüne Leuchtstoffe wie Nitridosilikate und rote Leuchtstoff wie Nitride.

Der Leuchtstoff lässt sich im Prinzip aber auch für andere Zwecke einsetzen, insbesondere Beleuchtungssysteme wie in WO 2006/072919 erörtert, beispielsweise LCD und PDP.

Insbesondere lassen sich dafür auch Mischungen aus verschiedenen Ausführungsformen des neuartigen Leuchtstoffs verwenden.

### Kurze Beschreibung der Zeichnungen

Im Folgenden soll die Erfindung anhand eines Ausführungsbeispiels näher erläutert werden. Die Figuren zeigen:
- Fig. 1: die Effizienz eines BAM-Leuchtstoffs bei Raumtemperatur als Funktion des Eu-Gehalts;
- Fig. 2: die Effizienz des gleichen BAM-Leuchtstoff bei 175 °C als Funktion des Eu-Gehalts;
- Fig. 3: die Emissionsintensität des gleichen BAM-Leuchtstoffs bei 400 nm Anregung als Funktion des Eu-Gehalts;
- Fig. 4: die Quanteneffizienz des gleichen BAM-Leuchtstoffs als Funktion des Eu-Gehalts bei 400 nm Anregung;
- Fig. 5: die Absorption des gleichen BAM-Leuchtstoffs bei 400 nm Anregung als Funktion des Eu-Gehalts;
- Fig. 6: die Remission eines speziellen BAM-Leuchtstoffs als Funktion der Wellenlänge;
- Fig. 7: die Emission des gleichen Leuchtstoffs als Funktion der Wellenlänge;
- Fig. 8: das Löschungs-Verhalten (Quenching) des gleichen Leuchtstoffs als Funktion der Temperatur;
- Fig. 9: das Emissionsverhalten eines modifizierten BAM-Leuchtstoffs beim Einbau von Mn;
- Figur 10: das Emissionsverhalten verschiedener Leuchtstoffe mit unterschiedlicher Stöchiometrie;
- Figur 11: den prinzipiellen Aufbau einer Lichtquelle für blaugrünes Licht;
- Figur 12: den prinzipiellen Aufbau einer Lichtquelle für weißes Licht;
- Figur 13: den prinzipiellen Aufbau einer Entladungslampe.

### Bevorzugte Ausführung der Erfindung

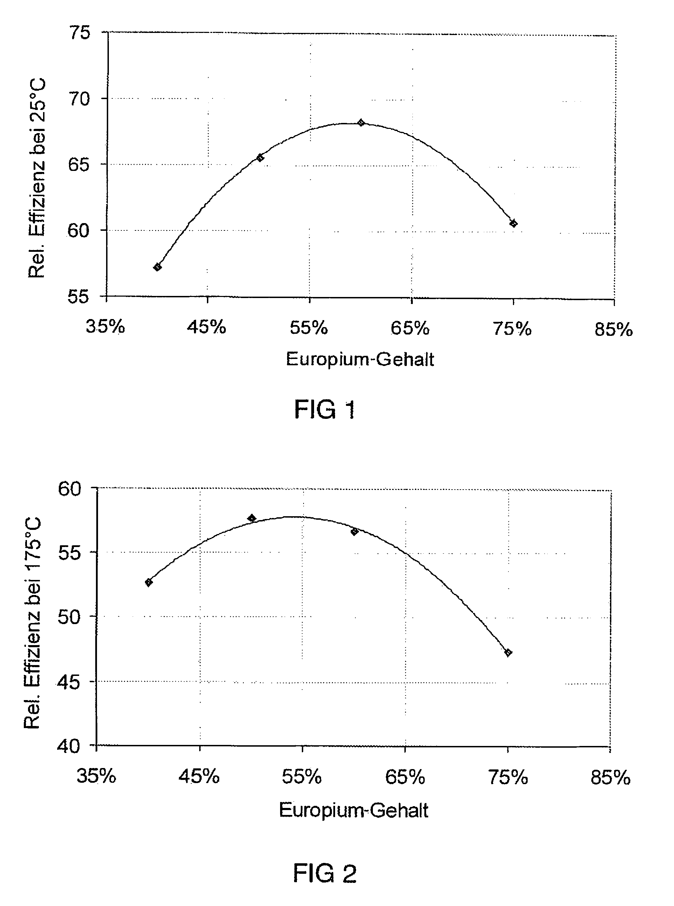

Figur 1 zeigt die relative Effizienz eines BAM-Leuchtstoffs BaₓEu₁₋ₓMgAl₁₀O₁₇ als Funktion des Eu-Gehalts in Mol.-%, bezigen auf M = (Ba,Eu). Es zeigt sich, dass die optimale Eu-Konzentration bei Raumtemperatur (25 °C) bei etwa 60 % Eu liegt, entsprechend einem Wert x = 0,4.

Die gleiche Messung, bezogen auf eine Temperatur von 175 °C liefert das Ergebnis, dass hier die optimale Eu-Konzentration bei etwa 54% liegt, entsprechend einem Wert x = 0,46.

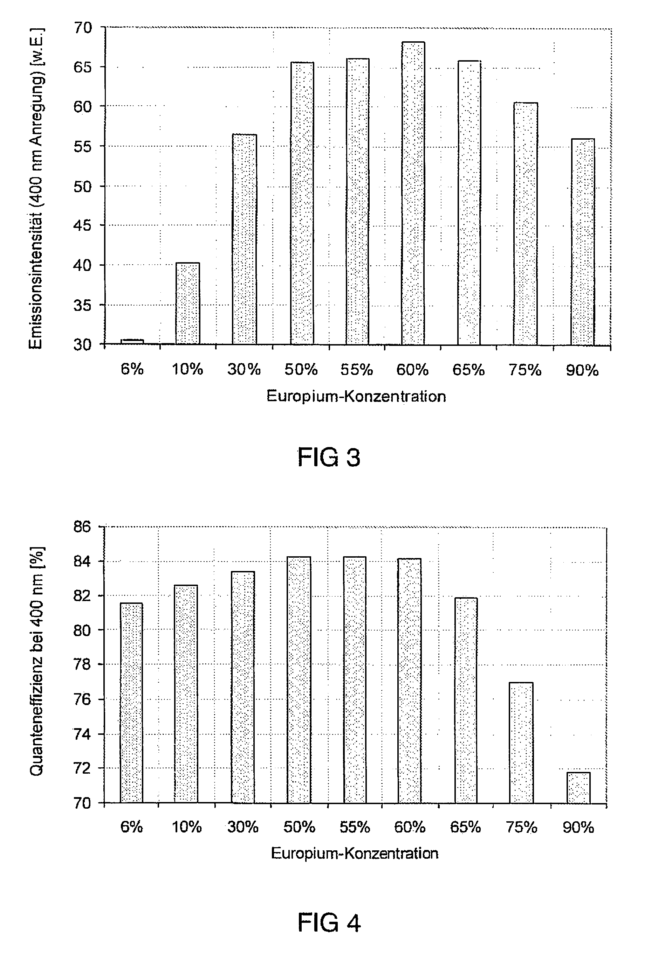

In Figur 3 ist die Emissionsintensität dieses Leuchtstoffs als Funktion der Eu-Konzentration bei Anregung mit 400 nm gezeigt. Überraschenderweise erreicht die Intensität ihr Maximum erst bei einer Eu-Konzentration von etwa 60 %, was wieder einem Wert x = 0,4 entpwricht.

In Figur 4 ist die Quanteneffizienz als Funktion der Eu-Konzentration gezeigt. Überraschenderweise steigt die Quanteneffizienz bei relativ langwelliger Anregung, hier beispielhaft bei 400 nm, mit zunemhndem Eu-Gehalt zunächst an. Ein Optimum zeigt sich bei Werten für Eu im Bereich 50 bis 60 %, also einem x = 0,4 bis 0,5.

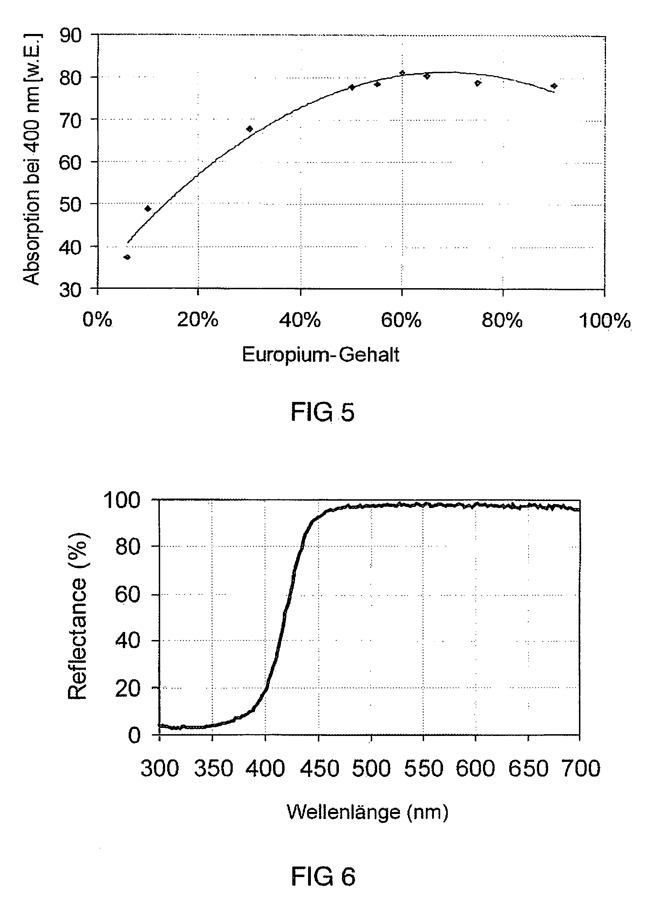

Figur 5 zeigt die Absorption dieses BAM-Leuchtstoffs, bezogen auf eine Pulvertablette. Es zeigt sich, dass der neuartige Leuchtstoff eine gegenüber bisher üblichen BAM:Eu- Leuchtstoffen erheblich bessere Absorption aufweist.

Figur 6 zeigt die Remission des Leuchtstoffs Eu06Ba0,4MgA110O17, in einer Pulvertablette vorliegend. Es zeigt sich, dass dieser Leuchtstoff eine gegenüber bisherigen Leuchtstoffen erheblich verbesserte Reflektanz aufweist. Dies gilt insbesondere für die Absorption.

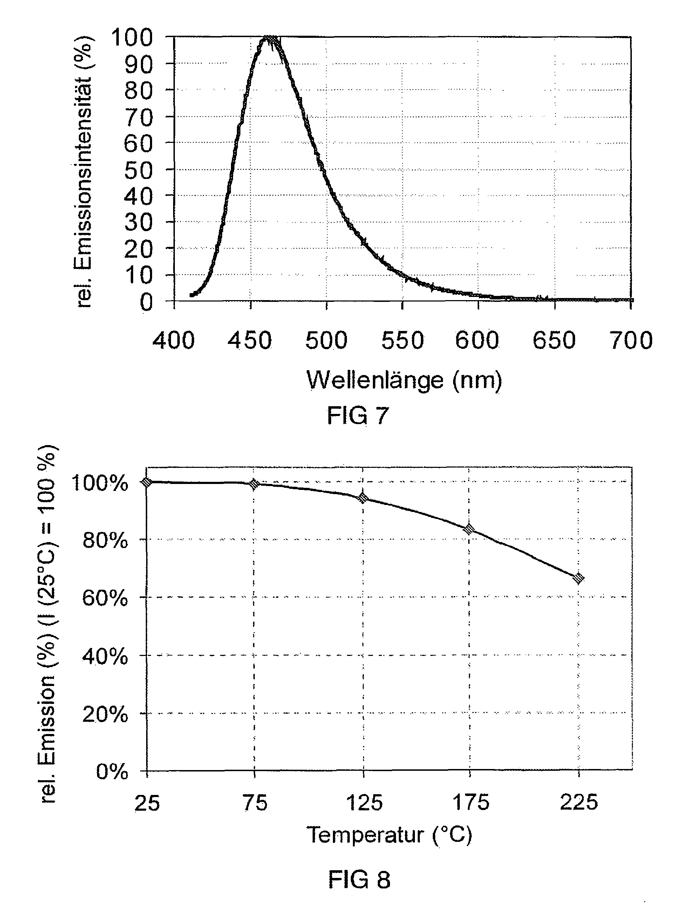

Figur 7 zeigt die Emission dieses konkreten Leuchtstoffs als Funktion der Wellenlänge. Es zeigt sich, dass das Emissionsverhalten sehr gut für LEDs mit hoher Farbwiedergabe geeignet ist. die Emission ist relativ langwellig und hat einen hohen Blau-Grün-Anteil. Die Anregung ist auch hier mit 400 nm erfolgt.

Figur 8 zeigt das Lösungsverhalten dieses konkreten Leuchtstoffs als Funktion der Temperatur. Er ist sehr stabil, so dass bei 175°C die Effizienz immer noch mehr als 80 % der Effizienz bei 25 °C beträgt. Dies macht den neuen Leuchtstoff besonders für temperaturbelastete Umgebungen, beispielsweise einer LED für Fahrzeugscheinwerfer, attraktiv.

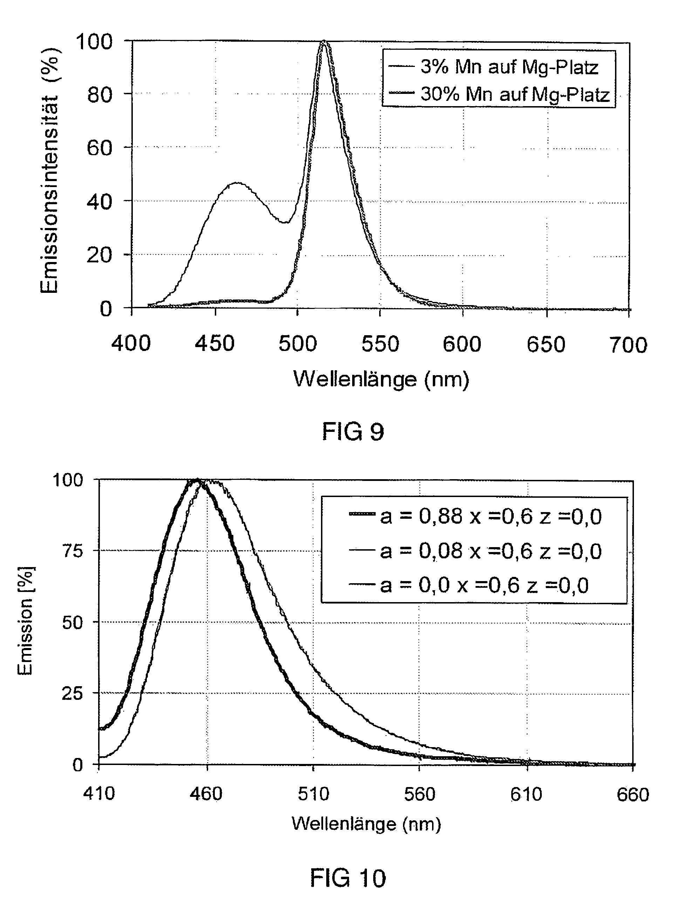

Figur 9 zeigt das Emissionsverhalten eines Leuchtstoffs mit der Stöchiometrie Ba0,4Eu0,6Mg1-yMnyAl10O17. der Einbau von Mn auf Mg-Gitterplätze ermöglicht die Realisierung eines hocheffizienten, schmalbandigen Grünleuchtstoffs, der sich ideal beispielsweise für die LCD-Hinterleuchtung eignet.

Figur 10 zeigt einen Vergleich der Emission verschiedener Mischungen aus einer Ba-armen Aluminatphase und der eigentlichen BAM-Phase. Der Mischungsparameter ist a, wie oben beschrieben. Bei geringer Aluminat-Konzentration, a = 0,08, wird keine signifikante Änderungen gegenüber der reinen BAM-Phase, also a = 0, beobachtet. Beide Kurven liegen praktisch übereinander. Bei hoher Aluminat-Konzentration a ergibt sich eine kurzwellige Verschiebung der Emission. Im gezeigten Ausführungsbeispiel ist a = 0,88. Dabei ist jeweils die Eu-Konzentration x, als Anteil am Metall M = (Ba₁₋ₓ, Euₓ) verstanden, 60 %. Dabei wird kein Mn als Co-Dotierung verwendet (z = 0). Dieser Mischungseffekt kann zur optimalen Einstellung der Emissionswellenlänge bzw. ihres Peaks in einer LED genutzt werden.

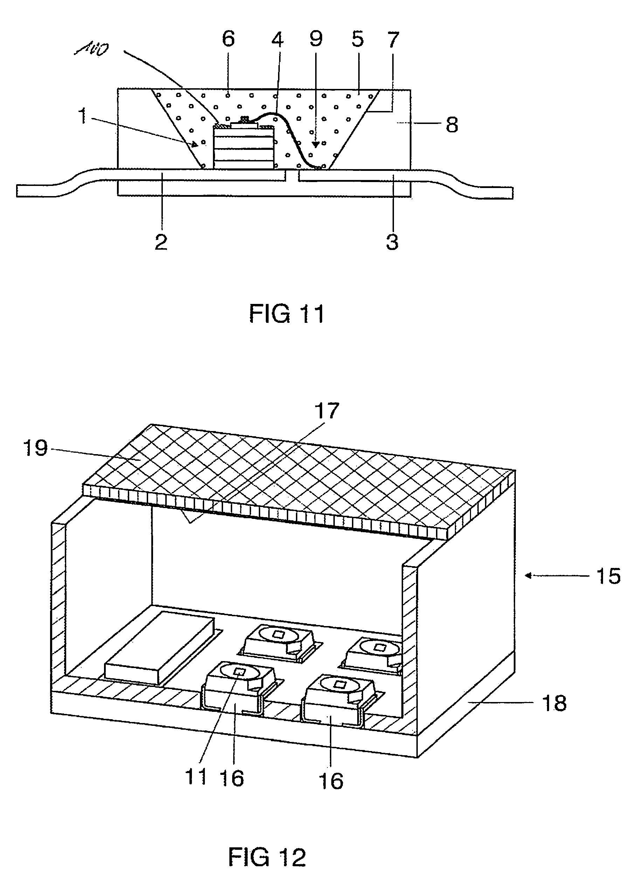

Figur 11 zeigt den prinzipiellen Aufbau einer Konversions-LED, auch LUKOLED, genannt, mit dem erfindungsgemäßen Leuchtstoff. Der Aufbau einer Lichtquelle für blaugrünes Licht ist in Figur 11 explizit gezeigt. Die Lichtquelle ist ein Halbleiterbauelement mit einem Chip 1 des Typs InGaN mit einer Peakemissionswellenlänge im UV von beispielsweise 405 nm, das in ein lichtundurchlässiges Grundgehäuse 8 im Bereich einer Ausnehmung 9 eingebettet ist. Der Chip 1 ist über einen Bonddraht 4 mit einem ersten Anschluss 3 und direkt mit einem zweiten elektrischen Anschluss 2 verbunden. Die Ausnehmung 9 ist mit einer Vergussmasse 5 gefüllt, die als Hauptbestandteile ein Silikonharz (80 bis 90 Gew.-%) und Leuchtstoffpigmente 6 (typisch weniger als 20 Gew.-%) enthält. Die Ausnehmung hat eine Wand 7, die als Reflektor für die Primär- und Sekundärstrahlung vom Chip 1 bzw. den Pigmenten 6 dient. Die Primärstrahlung der UV-LED wird vollständig vom Leuchtstoff in blaugrüne Strahlung konvertiert. Der verwendete Leuchtstoff ist das oben beschriebene BAM:(Eu,Mn).

Analog lässt sich mit einem derartigen Leuchtstoff auch eine Lichtquelle für weißes Licht realisieren, indem beispielsweise drei Leuchtstoffe verwendet werden, die von der UV-Strahlungsquelle angeregt werden, rot, grün und blau zu emittieren. Der grüne Leuchtstoff ist beispielsweise ein Ba-Sion, der rote ist beispielsweise Ca5Al4Si8N18:Eu oder ein Nitridosilikat (Ca,Sr)2Si5N8:Eu und der blaue ist ein Aluminat-Leuchtstoff wie BAM:Eu mit x = 0,4. bevorzugt ist dabei der blaue Leuchtstoff des Typs BAM:Eu direkt auf der Oberfläche des Chips in einer Schicht 100 mit einer Dicke zwischen 5 und 50 µm, bevorzugt 5 bis 30 µm aufgetragen. Diese Schicht wird beispielsweise elektrophoretisch aufgetragen. Sie kann wegen der extrem hohen Absorption dieses Leuchtstoffs so dünn gehalten werden und enthält bevorzugt maximal 20 Gew.% anderer Beifügungen wie Binder. Die andern Leuchtstoffe, sofern weitere verwendet werden, sind jedoch weiter entfernt, insbesondere im Harz verteilt ie dargestellt, oder auf der ersten schiht 100 als zweite Schicht aufgetragen.

Der Aufbau einer anderen Lichtquelle für weißes Licht ist in Figur 12 explizit gezeigt. Die Lichtquelle, ist ein Halbleiterbauelement 16 vom Typ LED mit einem UV emittierenden Chip 11 des Typs InGaN mit einer Peakemissionswellenlänge von beispielsweise 380 nm. Das Halbleiterbauelement 16 ist in ein lichtundurchlässiges Grundgehäuse 18 mit Seitenwand 15 und Deckel 19 eingebettet. Der Chip ist die Primärlichtquelle für zwei Leuchtstoffe. Der erste Leuchtstoff 14 ist das BAM:Eu(60%), der die primäre Strahlung des Chips 13 teilweise konvertiert und in blaue Strahlung der Peakemission 460 nm umwandelt. Der zweite Leuchtstoff ist ein gelber Leuchtstoff wie beispielsweise YAG:Ce, der die primäre Strahlung des Chips 13 teilweise konvertiert und in gelbe Strahlung der Peakemission 560 nm umwandelt.

In einem anderen Ausführungsbeispiel wird als primäre Lichtquelle eine UV-LED (etwa 380 nm) für eine weiße RGB-Lumineszenzkonversions-LED verwendet, wobei hier Probleme mit Alterung und Degradation von Gehäuse und Harz bzw. Leuchtstoff durch zusätzliche an sich bekannte Maßnahmen möglichst weitgehend vermieden werden müssen wie sorgfältige Wahl des Gehäusematerials, Zugabe UV-resistenter Harzkomponenten. Der große Vorteil dieser Lösung ist die geringe Blickwinkelabhängigkeit der Emissionsfarbe und die hohe Farbstabilität.

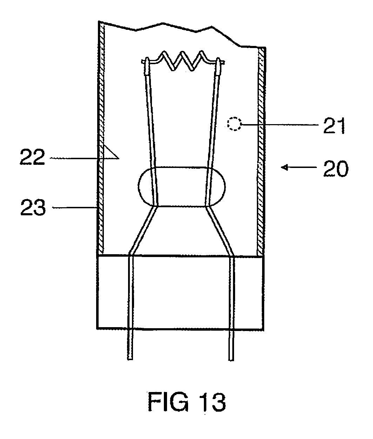

Figur 13 zeigt eine Niederdruck-Entladungslampe 20 mit einer quecksilberfreien Gasfüllung 21 (schematisiert), die eine Indiumverbindung und ein Puffergas analog WO 02/10374 enthält, wobei eine Schicht 22 aus BAM:Eu(60 %) besteht. In aller Regel werden bei Leuchtstofflampen sog. Dreibandenleuchtstoffe eingesetzt. Dazu ist ein grüner und roter Leuchtstoff beigemengt. Gut geeignet sind Ba-Sion sowie rotes Nitridosilikat (Ba,Sr,Ca)2Si5N8:Eu.

Dieses Leuchtstoff-System ist einerseits der Indium-Strahlung angepasst, weil diese wesentliche Anteile sowohl im UV als auch im blauen Spektralbereich hat, die beide gleichermaßen gut absorbiert werden. Diese Mischung eignet sich aber auch für konventionelle Leuchtstofflampen. Möglich ist auch die Anwendung bei einer Indium-Lampe auf Hochdruck-Basis wie an sich aus US 4 810 938 bekannt. Dabei hat die Lampe ein übliches Entladungsgefäß mit Metallhalogenid-Füllung. Die Strahlung trifft auf eine Leuchtstoff-Schicht auf einem Außenkolben, die einen Teil der primären Strahlung in blaugrüne Strahlungsanteile umwandelt. Die Leuchtstoff-Schicht besteht aus BAM:Eu(60 %). Diese Technik ist im Prinzip beispielsweise in der US-B 6 958 575 beschrieben.

Als Lichtquelle für ein Beleuchtungssystem eignet sich bevorzugt eine LED, insbesondere auf Basis von InGaN oder eine Entladungslampe, insbesondere auf Basis von Quecksilber oder ein Beleuchtungsmodul, insbesondere auf Basis einer LED. Der erfindungsgemäße Leuchtstoff kann direkt auf der Lichtquelle aufgetragen sein oder auch separat davorgeschaltet sein.

## Patentansprüche

1. Leuchtstoff aus dem BAM-System als Wirtsgitter, mit der Stöchiometrie MₓEu₁₋ₓMg_{1-y+d}Mn_{y}Al₁₀₊₂O_{17+d+3f}, **dadurch gekennzeichnet, dass** gilt
0,2 ≤ x ≤ 0,48; bevorzugt ist 0,35 ≤ x ≤ 0,45;
0 ≤ y ≤ 0.3, bevorzugt 0 ≤ y ≤ 0,2;
0 ≤ d ≤ 0,1;
-0,1 ≤ f ≤ 1,0,
wobei M = Ba allein verwendet wird oder teilweise ersetzt ist durch Sr und/oder Ca gemäß der Formel Ba_{g}(Ca,Sr)_{1-g} mit g ≥ 0.7.

2. Leuchtstoff nach Anspruch 1, **dadurch gekennzeichnet, dass** die Stöchiometrie BaₓEu₁. ₓMgAl₁₀O₁₇, ist wobei für x gilt: 0,35 ≤ x ≤ 0,45.

3. Leuchtstoff nach Anspruch 1, **dadurch gekennzeichnet, dass** die Stöchiometrie BaₓEu₁₋ₓMg_{z}Mn_{1-z}Al₁₀O₁₇, ist, wobei x im Bereich x = 0,35 bis 0,48 angesetzt ist und dass für z = 0,65 bis 0,995 angesetzt ist.

4. Leuchtstoff nach Anspruch 1, **dadurch gekennzeichnet, dass** die Stöchiometrie BaₓEu₁₋ₓMg_{1-k+d}MnₖAl_{10+2f}O_{17+d+3f}, ist, wobei gilt:
0,2 ≤ x ≤ 0,48; bevorzugt ist 0,35 ≤ x ≤ 0,45;
0 ≤ k ≤ 0,3, bevorzugt 0 ≤ k ≤ 0,2;
0 ≤ d ≤ 0,1;
-0,1 ≤ f ≤ 1,0.

5. Verwendung des Leuchtstoffs gemäß einem der vorhergehenden Ansprüche zur Konversion von Primärstrahlung, wobei die Peakwellenlänge der Primärstrahlung im Bereich 300 bis 420 nm, bevorzugt 340 bis 410 nm liegt.

6. Beleuchtungssystem mit einer Lichtquelle und mindestens einem davorgeschalteten Leuchtstoff zur mindestens teilweisen Konversion der Strahlung der Lichtquelle in längerwellige Strahlung, **dadurch gekennzeichnet, dass** die Lichtquelle primäre Strahlung mit einer Peakwellenlänge im Bereich 300 bis 420 nm emittiert und dass ein zur Konversion eingesetzter Leuchtstoff **ein Leuchtstoff gemäß_einem der Ansprüche 1 bis 4.**

7. Beleuchtungssystem nach Anspruch 6, **dadurch gekennzeichnet, dass** die Lichtquelle eine LED ist, insbesondere auf Basis von InGaN.

8. Beleuchtungssystem nach Anspruch 6, **dadurch gekennzeichnet, dass** die Lichtquelle eine Entladungslampe ist, insbesondere auf Basis von Quecksilber.

9. Beleuchtungssystem nach Anspruch 6, **dadurch gekennzeichnet, dass** die Lichtquelle ein Beleuchtungsmodul mit einer LED ist, insbesondere auf Basis von InGaN.

## Claims

1. Luminophore consisting of the BAM system as a host lattice, having the stoichiometry MₓEu₁₋ₓMg_{1-y+d}Mn_{y}Al_{10+2f}O_{17+d+3f}, **characterized in that**
0.2 ≤ x ≤ 0.48; preferably 0.35 ≤ x ≤ 0.45;
0 ≤ y ≤ 0.3; preferably 0 ≤ y ≤ 0.2;
0 ≤ d ≤ 0.1;
-0.1 ≤ f ≤ 1.0,
wherein M = Ba is used alone or is partially replaced by Sr and/or Ca according to the formula Bag(Ca,Sr)_{1-g} with g ≥ 0.7.

2. Luminophore according to Claim 1, **characterized in that** the stoichiometry is BaₓEu₁₋ₓMgAl₁₀O₁₇, where 0.35 ≤ x ≤ 0.45.

3. Luminophore according to Claim 1, **characterized in that** the stoichiometry is BaₓEu₁₋ₓMg_{z}Mn_{1-z}Al₁₀O₁₇, where x lies in the range x = 0.35 to 0.48 and z = 0.65 to 0.995.

4. Luminophore according to Claim 1, **characterized in that** the stoichiometry is BaₓEu₁₋ₓMg_{1-k+d}MnₖAl_{10+2f}O_{17+d+3f}, where:
0.2 ≤ x ≤ 0.48; preferably 0.35 ≤ x ≤ 0.45;
0 ≤ k ≤ 0.3; preferably 0 ≤ k ≤ 0.2;
0 ≤ d ≤ 0.1;
-0.1 ≤ f ≤ 1.0.

5. Use of the luminophore according to one of the preceding claims for the conversion of primary radiation, the peak wavelength of the primary radiation lying in the range of from 300 to 420 nm, preferably from 340 to 410 nm.

6. Lighting system having a light source and at least one luminophore placed in front of it for at least partial conversion of the light source's radiation into longer-wave radiation, **characterized in that** the light source emits primary radiation with a peak wavelength in the range of from 300 to 420 nm and **in that** a luminophore used for the conversion is a luminophore according to one of Claims 1 to 4.

7. Lighting system according to Claim 6, **characterized in that** the light source is an LED, in particular based on InGaN.

8. Lighting system according to Claim 6, **characterized in that** the light source is a discharge lamp, in particular based on mercury.

9. Lighting system according to Claim 6, **characterized in that** the light source is a lighting module having an LED, in particular based on InGaN.

## Revendications

1. Substance luminescente du système BAM en tant que réseau hôte, avec la stoechiométrie MₓEu₁₋ₓMg_{1-y+d}Mn_{y}Al_{10+2f}O_{17+d+3f}, **caractérisée en ce que**
0,2 ≤ x ≤ 0,48 ; de préférence 0,35 ≤ x ≤ 0,45 ;
0 ≤ y ≤ 0,3 ; de préférence 0 ≤ y ≤ 0,2 ;
0 ≤ d ≤ 0,1 ;
-0,1 ≤ f ≤ 1,0 ;
dans lequel M = Ba est utilisé seul ou est partiellement remplacé par Sr et/ou Ca selon la formule Ba₂(Ca, Sr)_{1-g} avec g ≥ 0, 7.

2. Substance luminescente selon la revendication 1, **caractérisée en ce que** la stoechiométrie est BaₓEu₁₋ₓMgAl₁₀O₁₇, x valant : 0,35 ≤ x ≤ 0,45

3. Substance luminescente selon la revendication 1, **caractérisée en ce que** la stoechiométrie est BaₓEu₁₋ₓMgₓMn_{1-z}Al₁₀O₁₇, x s'appliquant à la plage de x = 0,35 à 0,48 et **en ce que** z s'applique de z = 0,65 à 0,995.

4. Substance luminescente selon la revendication 1, **caractérisée en ce que** la stoechiométrie est BaₓEu₁₋ₓMg₁-_{k+d}MnₖAl_{10+2f}O_{17+d+3f}, dans laquelle
0,2 ≤ x ≤ 0,48 ; de préférence 0,35 ≤ x ≤ 0,45 ;
0 ≤ k ≤ 0,3 ; de préférence 0 ≤ k ≤ 0,2 ;
0 ≤ d ≤ 0,1 ;
-0,1 ≤ f ≤ 1,0.

5. Utilisation de la substance luminescente selon une des revendications précédentes pour la conversion de rayonnement primaire, dans laquelle la longueur d'onde de pic du rayonnement primaire se situe dans la plage de 300 à 420 nm, de préférence de 340 à 410 nm.

6. Système d'éclairage avec une source lumineuse et au moins une substance luminescente branchée devant pour la conversion au moins partielle du rayonnement de la source lumineuse en rayonnement de longueurs d'ondes plus élevées, **caractérisé en ce que** la source lumineuse émet du rayonnement primaire de longueur d'onde de pic située dans la plage de 300 à 420 nm et **en ce qu'**une substance luminescente mise en oeuvre pour la conversion est une substance luminescente selon une des revendications 1 à 4.

7. Système d'éclairage selon la revendication 6, **caractérisé en ce que** la source lumineuse est une LED, notamment basée sur le InGaN.

8. Système d'éclairage selon la revendication 6, **caractérisé en ce que** la source lumineuse est une lampe à décharges, notamment basée sur le mercure.

9. Système d'éclairage selon la revendication 6, **caractérisé en ce que** la source lumineuse est un module d'éclairage avec une LED, notamment basée sur le InGaN.
